# FASCICULE DE BREVET EUROPEEN

(11) **EP 2 445 661 B1**
(45) Date de publication et mention de la délivrance du brevet: **27.11.2019**
(21) Numéro de dépôt: 10728642.9
(22) Date de dépôt: 23.06.2010
(51) Int. Cl.: B21K 3/04, B24B 19/14, B24B 21/16, G05B 19/401, B23P 15/02, G01B 21/20

(54) **PROCEDE DE FABRICATION D'UNE PIECE FORGEE AVEC POLISSAGE ADAPTATIF**
VERFAHREN ZUR HERSTELLUNG EINES SCHMIEDETEILS MIT ADAPTIVER POLIERUNG
METHOD FOR MANUFACTURING A FORGED PART WITH ADAPTIVE POLISHING

(30) Priorité: 26.06.2009 FR 0954398
(43) Date de publication de la demande: 02.05.2012
(73) Titulaire: Safran Aircraft Engines, 75015 Paris (FR)
(72) Inventeur: CHOLET, Stéphane, F-95130 Le Plessis Bouchard (FR); LAMAISON, Bertrand, F-92130 Issy les Moulineaux (FR); MALASSIGNE, Xavier, F-78740 Vaux sur Seine (FR); VILLANOVA, Arnaud, F - 86550 Mignaloux-Beauvoir (FR)
(74) Mandataire: Gevers & Orès
(86) Numéro de dépôt international: PCT/EP2010/058946
(87) Numéro de publication internationale: WO 2010/149720

(56) Documents cités:
- EP-A- 1 207 004
- EP-A- 1 525 949
- WO-A-91/12111
- DE-A1- 4 223 483
- DE-A1-102007 048 588
- GB-A- 2 350 809
- JP-A- 2002 301 659
- JP-A- 2004 050 300
- US-A- 5 047 966
- US-A1- 2005 159 840

## Description

La présente invention concerne le domaine de la fabrication de pièces telles que des aubes de turbomachine par la technique du forgeage, notamment du forgeage de précision. Elle vise plus particulièrement la fabrication d'aubes de grandes dimensions en alliage de titane telles que les aubes de soufflante de turboréacteur et la finition de celles-ci avec mise à conformité géométrique de la pièce semi finie venant du forgeage par une opération de polissage adaptatif.

Les aubes de soufflante de turboréacteur sont généralement produites par forgeage de précision. Le forgeage de précision consiste à opérer par frappes successives d'une ébauche dans des matrices appropriées jusqu'à l'obtention d'une pièce semi finie présentant une forme et des caractéristiques dimensionnelles proches de la pièce finie. Dans le cas d'une aube de soufflante semi finie après forgeage, la pale n'est pas conforme aux spécifications finales, en termes de caractéristiques géométriques, à l'intérieur de tolérances acceptées. Ces caractéristiques sont par exemple le vrillage qui est une rotation des sections de la pale sur l'axe d'empilage, le flambage qui est une flexion de la pale par rapport à l'axe d'empilage et des points de référence, l'ondulation et un défaut de forme.

Une mise à conformité de la pale est donc nécessaire. Globalement, celle-ci consiste à corriger le profil de l'extrados et de l'intrados en enlevant de la matière aux endroits de la pale présentant une surépaisseur par rapport au profil théorique. Dans le cadre du forgeage de précision, la correction porte sur l'enlèvement d'une surépaisseur allant jusqu'à quelques dixièmes de millimètre, entre 0,4 et 0,6 mm généralement.

On détermine un nombre de points correspondant au profil théorique, répartis selon un réseau le long de l'axe de la pale et entre le bord d'attaque et le bord de fuite. On mesure les caractéristiques géométriques de l'aube semi finie en ces points par des moyens palpeurs tridimensionnels. Le brevet EP 1596156 au nom de la demanderesse décrit un tel moyen. On connaît ainsi la différence entre le profil théorique et le profil réel.

Selon l'art antérieur, on procède ensuite à l'opération de tri épaisseur qui consiste à analyser et protéger par application d'un revêtement les zones les moins épaisses de la pièce. Cette opération est effectuée principalement manuellement. On enlève ensuite, entre ces zones protégées, l'excédent de matière par usinage chimique, qui consiste à maintenir pendant une durée déterminée la pièce dans un bain d'acide propre à attaquer le métal. On procède ensuite à une reprise manuelle par polissage local et itératif des zones hors tolérance présentant des défauts d'aspect et des traces de l'usinage chimique. Il s'agit pour cette opération d'un polissage dit de premier aspect. Manuellement, le cas échéant, on retouche la pièce pour que sa forme entre dans les tolérances imposées.

Enfin un polissage automatisé, dit d'aspect final, assure la continuité du profil aérodynamique et l'état de surface nécessaire au bon écoulement du flux d'air. Le polissage automatisé est généralement réalisé au moyen d'une bande abrasive. On utilise par exemple une bande dont le matériau abrasif est le carbure de silicium. La bande est montée sur une roue entraînée en rotation tangentiellement à la surface de la pièce. Le déplacement de la roue par rapport à la surface est piloté par un programme prenant en compte la géométrie de la surface à polir. Les paramètres tels que la vitesse de défilement de la bande abrasive sur la surface, la vitesse de déplacement de la roue par rapport à la pièce ainsi que la pression exercée sur la surface et le grain du matériau abrasif sont déterminés de manière à enlever l'épaisseur requise de matière et assurer l'état de surface voulu. On trouve une description d'une machine de polissage par bande abrasive dans le brevet US 5193314.

Les opérations manuelles surtout lorsqu'on doit travailler des pièces lourdes comme les aubes de soufflante de turboréacteur, sont pénibles pour l'opérateur et éventuellement génératrices de troubles musculo-squelettiques. En outre, ces opérations requièrent des contrôles. On cherche à remplacer les opérations manuelles par des opérations qui libèrent l'opérateur, et qui permettent de regrouper plusieurs opérations. La demanderesse a déjà mis au point un procédé de polissage automatisé en alliage de titane au moyen d'une bande abrasive constituée de grains super abrasifs en diamant industriel ou en nitrure de bore ; ce procédé est décrit dans le brevet EP 1525949.

La demanderesse s'est fixé comme objectif de réaliser en une seule et même étape, et de préférence de manière automatique, la mise à conformité géométrique et le polissage final de la pale.

On parvient à réaliser cet objectif avec un procédé de fabrication selon la revendication 1.

La machine étant à commande numérique, on génère un programme spécifique de la pièce à polir.

Dans la technique antérieure de mise à conformité, les machines de polissage automatisées sont utilisées pour le polissage d'aspect final, à l'aide d'une bande abrasive adaptée à l'état de surface souhaité. Dans l'art antérieur, on enlève une épaisseur uniforme de matière afin de ne pas détruire le profil mis à conformité manuellement lors de l'opération précédente, on supprime maintenant l'étape de mise à conformité manuelle et on l'intègre à l'opération de polissage final.

Les avantages de la mise à conformité de l'invention qui peut être ainsi rendu automatique sont la suppression des opérations manuelles de tri, de masquage des zones à ne pas traiter et de retouche des pièces.

On réalise aussi un gain de temps sur le cycle de fabrication des pièces.

On constate une diminution de la dispersion géométrique liée aux retouches manuelles.

Enfin, on supprime les risques de maladies professionnelles liées à la répétitivité des gestes.

Conformément à une autre caractéristique, on définit au préalable à la surface de la pièce une pluralité de points de mesure, on mesure les caractéristiques géométriques de la pièce semi finie auxdits points de mesure, et on pilote l'enlèvement de matière par ladite bande abrasive en lesdits points de mesure en fonction de l'écart entre les caractéristiques géométriques de la pièce semi finie et les caractéristiques géométriques nominales.

Conformément à une autre caractéristique, on définit une cartographie des enlèvements de matière à partir des mesures des caractéristiques géométriques de la pièce semi finie, et on traduit ladite cartographie en une cartographie des paramètres de commande de la bande abrasive. De préférence, on établit au préalable une calibration des paramètres de commande de la bande abrasive en chacun des points de mesure. L'opération de calibration est réalisée une seule fois pour un type de pièce donné.

Dans le procédé selon l'invention on pilote la bande en faisant varier la vitesse d'avance relative de la pièce par rapport à la bande abrasive le long de l'axe longitudinal de la pièce, les autres paramètres de pilotage de la bande abrasive étant maintenus constants. Les autres paramètres sont la vitesse de rotation de la bande abrasive, et la pression de contact de la roue sur la surface à traiter.

Grâce à cette caractéristique du procédé on résout de manière avantageuse la difficulté de polir la surface de la pièce tout en effectuant en même temps une mise à conformité géométrique.

Dans la phase de calibration, on établit alors une relation, telle qu'une loi ou une table de correspondance entre les paramètres pilotés et la quantité d'enlèvement de matière. On peut par exemple utiliser une calibration qui est effectuée à partir de la mesure en chaque point de la quantité de matière enlevée associée à au moins deux vitesses d'avance différentes.

Afin d'assurer un polissage uniforme en tout point on enlève en chaque point de mesure une quantité de matière minimale correspondant à un polissage uniforme.

Comme cela l'a été présenté plus haut le procédé s'applique en particulier à une aube de turbomachine, plus particulièrement une aube de soufflante de turboréacteur.

L'invention sera mieux comprise et d'autres buts, détails caractéristiques et avantages de celle-ci apparaîtront plus clairement au cours de la description explicatrice, détaillée, qui suit d'un mode de réalisation non limitatif en référence aux dessins annexés, sur lesquels :
La figure 1 représente schématiquement une aube de turbomachine vue de profil,
La figure 2 représente une machine de polissage à bande abrasive.

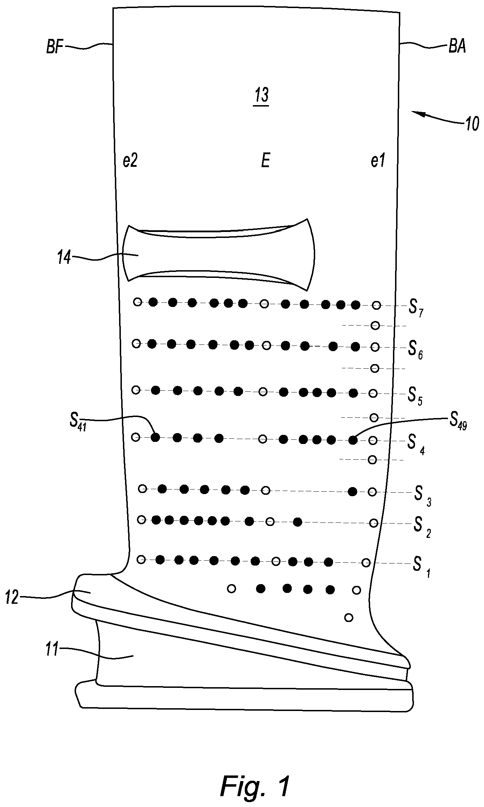

La pièce semi finie objet du procédé de l'invention est par exemple une aube de soufflante de turboréacteur, comme représentée sur la figure 1. Une telle pièce 10 en alliage de titane comprend un pied 11, une plateforme 12 et une pale 13 de forme aérodynamique balayée par les gaz traversant le moteur de l'amont vers l'aval. Des ailerons intermédiaires 14 forment des appuis d'une aube à l'autre. Une telle aube, lorsqu'elle est montée sur le rotor de compresseur, s'étend dans le moteur selon une direction généralement radiale par rapport à l'axe de rotation des parties mobiles de celui-ci. La pale comprend une face intrados et une face extrados s'étendant entre le bord d'attaque BA et le bord de fuite BF le long desquels elles se rejoignent.

Le contour de la pale est défini par une pluralité de sections ou coupes s'étendant entre la plateforme et le sommet, le long d'un axe dit axe d'empilage par rapport à un système de référence. Le système de référence est lui-même défini par des éléments ou des plans du pied de l'aube. Ainsi l'aube est entièrement caractérisée géométriquement par la connaissance de paramètres associés à des points prédéfinis sur chacune des sections. Cet ensemble constitue les caractéristiques géométriques nominales de l'aube et forme le modèle théorique. Les caractéristiques géométriques nominales peuvent se définir par des dimensions, des formes, une ou des coordonnées dans l'espace ou encore des orientations ou leur combinaison.

Dans l'exemple représenté, la partie de la pale située entre la plateforme et l'aileron pour l'intrados est définie par sept sections, S1 à S7. Sur chacune des sections, on a repérés des points à la surface de la pale entre BA et BF. Par exemple, la section référencée S4 comprend les points repérés S41 à S49 entre le bord de fuite BF et le bord d'attaque BA.

Comme dans le procédé de l'art antérieur, on commence par mesurer au moyen d'un robot de mesures tridimensionnelles, les caractéristiques géométriques de la pièce semi finie issue du forgeage.

La demanderesse a décrit un exemple de procédé et d'appareillage permettant la mesure simultanée des caractéristiques géométriques d'une pluralité de points répartis à la surface d'une aube dans le brevet EP 1 596 156. La mesure tridimensionnelle des coordonnées d'un ensemble de points prédéterminés de la surface d'une pièce mécanique par rapport à un référentiel prédéterminé, comporte :
- une phase préparatoire, dans laquelle on mesure simultanément les coordonnées des points prédéterminés de la surface d'une première pièce mécanique prise pour pièce étalon,
- une phase d'initialisation, dans laquelle on relève les mesures linéaires de déplacement selon les normales des points de ladite pièce étalon,
- une phase de mesure, dans laquelle on relève les mesures linéaires de déplacement sur les points de la pièce à mesurer correspondant aux points de la pièce étalon,
- une phase de calcul, dans laquelle on calcule les coordonnées tridimensionnelles des points de la pièce à mesurer à partir des coordonnées tridimensionnelles des points de ladite pièce étalon, des mesures linéaires, et des cosinus directeurs des normales théoriques en ces points.

Avec ce calcul, effectué en chacun des points de mesure sur les sections prédéfinies, on est à même d'effectuer un relevé des zones non conformes c'est-à-dire des zones présentant pour les points considérés une surépaisseur. Pour chacune des zones non conformes, on obtient ainsi une valeur d'enlèvement de matière pour les rendre conformes.

Selon l'art antérieur, on procédait aux opérations successives de
- tri manuel,
- usinage chimique,
- polissage manuel d'aspect pour élimination des défauts d'aspect et des traces d'usinage chimique, et
- polissage d'aspect final dans une machine de polissage automatisée au moyen d'une bande abrasive à grain fin, adapté à l'état de surface souhaité avec laquelle on enlève une épaisseur uniforme de matière pour atteindre la rugosité requise sans détruire le profil mis à conformité manuellement.

Le procédé de l'invention comprend, après la détermination des épaisseurs à enlever, la réalisation d'une cartographie des enlèvements de matière et le polissage dans une machine automatisée, avec enlèvement direct de matière en chacun des points correspondant à la cartographie établie, sans passer par l'étape de mise à conformité manuelle. En fait on polit la surface de l'aube tout en effectuant en même temps la mise à conformité géométrique.

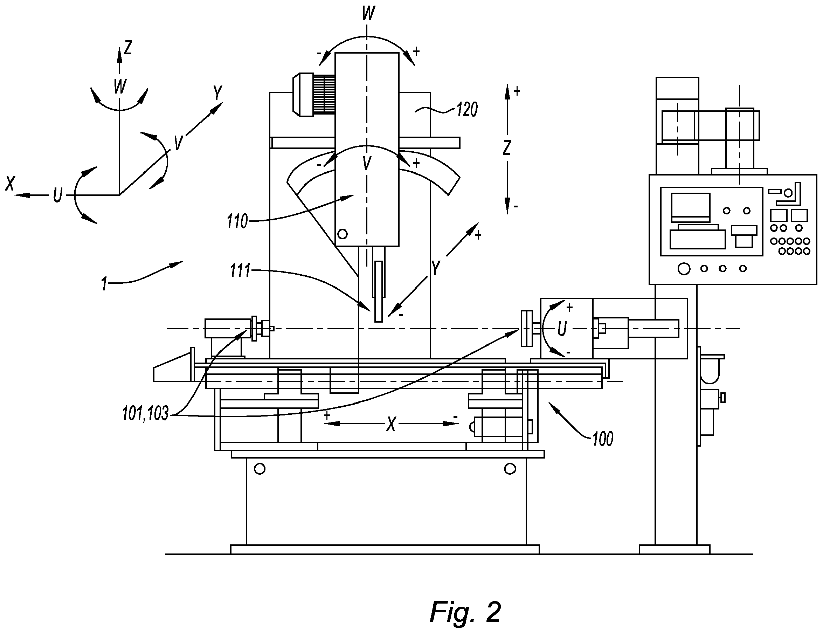

On décrit ci-après, en référence à la figure 2, un exemple de machine de polissage susceptible de convenir pour l'invention.

La machine 1 illustrée sur la figure 2 est disponible dans le commerce et fournie par la société IBS. Une table 100 comprend deux mors 101 et 103 entre lesquelles la pièce de forme allongée est maintenue horizontale. L'ensemble de la pièce avec son support peut se déplacer dans cette direction X ou tourner sur lui-même autour de cet axe dans la direction U par le moyen de moteurs électriques appropriés. Au dessus de la table une tête 110 est montée sur un pylône vertical 120 et peut se déplacer le long de son axe Z. La tête 110 peut également se mouvoir en rotation W autour de cet axe Z. Des moyens moteurs appropriés sont prévus pour l'entraînement de la tête dans les deux directions. Enfin la tête 110 peut se déplacer horizontalement dans la direction Y perpendiculaire à la direction X et pivoter selon la direction V autour de cet axe. Des moyens moteurs assurent ces déplacements. La tête 110 supporte une roue 111 de contact mobile autour d'un axe qui est fixe par rapport à elle-même. Un moteur monté sur la tête 110 assure l'entraînement de la roue 111 par le moyen d'une bande abrasive qui est montée en périphérie de la roue. L'ensemble des moyens moteurs est relié à un boîtier de commande qui comporte une unité de commande avec des moyens de programmation et des mémoires incorporant notamment les données des caractéristiques géométriques de la pièce à polir.

Pour polir la pièce on applique la bande localement tangentiellement à sa surface en exerçant une pression déterminée. On met en mouvement la bande qui tourne avec la roue 111.

La valeur d'enlèvement et l'état de surface dépendent de plusieurs paramètres :
- le grain de la bande abrasive,
- la vitesse de défilement de la bande par la rotation de la roue autour de son axe,
- la pression de la bande sur la surface de la pièce exercée par la roue,
- la vitesse d'avance relative de la bande le long de la pièce qui est la vitesse d'avance relative de la table, c'est-à-dire de la pièce par rapport à l'outil dans le sens de l'axe des X.

Selon l'invention, on résout la difficulté de polir la surface de l'aube tout en effectuant en même temps une mise à conformité géométrique en pilotant la vitesse d'avance relative entre la pièce et la bande de polissage, de préférence en gardant la pression de contact et la vitesse de rotation de la bande constantes.

La machine est pilotée à partir de la cartographie des enlèvements de matière. Elle est traduite pour la machine en une cartographie de vitesse d'avance relative de la pièce par rapport à la bande de polissage. Cette cartographie est établie en fonction d'une relation préétablie entre la vitesse d'avance et la quantité de matière enlevée. Une telle relation est établie par apprentissage en chaque point de la pièce.

L'apprentissage est réalisé une seule fois pour un type de pièce donné. Il consiste conformément à une mise en œuvre particulière du procédé de l'invention à mesurer en chaque point de la pièce les enlèvements de matière associés à une pluralité de vitesses d'avance uniformes différentes. On obtient la quantité enlevée par interpolation ; un exemple particulier consiste à déterminer l'enlèvement pour deux vitesses d'avance différentes.

En résumé les différentes étapes de mise à conformité d'une pièce, dont on connaît les caractéristiques géométriques nominales, consistent à en mesurer les caractéristiques géométriques et à repérer les zones non conformes. On établit à partir de ces mesures une cartographie des enlèvements de matière pour les points correspondants à ces zones. Ces données sont introduites dans la boîte de commande de la machine de polissage 1. On met en place la pièce à traiter entre les mors de la machine et on la met en action. La bande abrasive est entraînée en rotation par la roue et mise en place sur la pièce. Conformément à une caractéristique de l'invention, la vitesse de rotation de la roue est maintenue constante pendant toute l'opération de polissage ainsi que la pression de la roue sur la pièce. L'avance de la bande le long de la pièce est pilotée par la boîte de commande dans laquelle on a introduit les données ci-dessus. La vitesse d'avance varie ainsi en fonction de la quantité de matière à enlever. Le procédé permet ainsi de réaliser en une seule passe à la fois la mise à conformité et le polissage final de la pièce. De préférence on prévoit un enlèvement de matière minimum sur toute la surface afin de réaliser un polissage final uniforme.

## Revendications

1. Procédé de fabrication d'une pièce par forgeage, comprenant les étapes de réalisation d'une pièce semi finie par forgeage de précision, la détermination des caractéristiques géométriques conformes de la pièce à obtenir dans un modèle théorique et le polissage de la pièce au moyen d'une bande abrasive, la bande abrasive étant entraînée en rotation par une roue (111) et la pression de la bande sur la surface de la pièce étant exercée par la roue (111), la bande abrasive étant montée sur un support, ladite pièce et le support étant mobiles l'un par rapport à l'autre, **caractérisé par le fait qu'**il comprend les étapes suivantes :
- mesure des caractéristiques géométriques de la pièce semi finie après les opérations de forgeage, et comparaison au modèle théorique,
- détermination sur la surface de la pièce des zones qui sont non conformes,
- détermination de la quantité de matière à enlever dans chaque zone non conforme pour la rendre conforme,
- polissage de la pièce au moyen de la bande abrasive, en pilotant ladite bande de manière à enlever ladite quantité de matière dans chaque zone non conforme,
et en ce que la bande abrasive est pilotée en faisant varier la vitesse d'avance relative de la pièce par rapport à la bande abrasive le long de l'axe longitudinal de la pièce, les autres paramètres de pilotage de la bande abrasive étant maintenus constants, les autres paramètres comprenant la vitesse de rotation de la bande abrasive et la pression de contact de la roue (111) sur la surface de la pièce.

2. Procédé selon la revendication précédente, selon lequel on définit à la surface de la pièce une pluralité de points de mesure, on mesure les caractéristiques géométriques de la pièce semi finie auxdits points de mesure, on pilote l'enlèvement de matière par ladite bande abrasive en lesdits points de mesure en fonction de l'écart entre les caractéristiques géométriques de la pièce semi finie et les caractéristiques géométriques du modèle théorique.

3. Procédé selon la revendication précédente, selon lequel on définit une cartographie des enlèvements de matière à partir des mesures des caractéristiques géométriques de la pièce semi finie, et on traduit ladite cartographie en une cartographie de vitesse d'avance relative de la pièce par rapport à la bande abrasive.

4. Procédé selon la revendication précédente, selon lequel on établit au préalable une calibration des paramètres de commande de la bande abrasive en chacun des points de mesure, en établissant une loi ou une table de correspondance entre les paramètres pilotés et la quantité de matière enlevée.

5. Procédé selon la revendication 4, selon lequel on établit une relation entre ladite vitesse d'avance et la quantité d'enlèvement de matière.

6. Procédé selon la revendication précédente, selon lequel la calibration est effectuée à partir de la mesure en chaque point de la quantité de matière enlevée associée à au moins deux vitesses d'avance différentes.

7. Procédé selon l'une des revendications précédentes, selon lequel une quantité de matière minimale à enlever est prévue pour toute la surface de la pièce de manière à obtenir un polissage final uniforme souhaité.

8. Procédé selon l'une des revendications précédentes selon lequel la pièce est une aube de turbomachine, plus particulièrement une aube de soufflante de turboréacteur.

## Patentansprüche

1. Verfahren zur Herstellung eines Teils durch Schmieden, das die Ausführungsschritte eines Halbfertigteils durch Präzisionsschmieden, das Bestimmen der geometrischen Merkmale gemäß dem zu erhaltenden Teil in einem theoretischen Modell, und das Polieren des Teils mittels eines Schleifbands umfasst, wobei das Schleifband von einem Rad (111) in Drehung angetrieben wird, und der Druck des Bands auf der Oberfläche des Teils durch das Rad (111) ausgeübt wird, wobei das Schleifband auf einem Träger montiert ist, wobei das Teil und der Träger zueinander beweglich sind,
**dadurch gekennzeichnet, dass** es die folgenden Schritte umfasst:
- Messen der geometrischen Merkmale des Halbfertigteils nach den Schmiedevorgängen und Vergleichen mit dem theoretischen Modell,
- Bestimmen auf der Oberfläche des Teils der Zonen, die nicht konform sind,
- Bestimmen der Materialmenge, die in jeder nicht konformen Zone abzuheben ist, um sie konform zu machen,
- Polieren des Teils mittels des Schleifbands, indem das Band derart angesteuert wird, dass die Materialmenge in jeder nicht konformen Zone abgehoben wird,
und dadurch, dass das Schleifband angesteuert wird, indem man die relative Vorlaufgeschwindigkeit des Teils bezüglich des Schleifbands entlang der Längsachse des Teils variieren lässt, wobei die anderen Ansteuerparameter des Schleifbands konstant gehalten werden, wobei die anderen Parameter die Drehzahl des Schleifbands und den Berührungsdruck des Rads (111) auf der Oberfläche des Teils umfassen.

2. Verfahren nach dem vorstehenden Anspruch, wobei an der Oberfläche des Teils eine Vielzahl von Messpunkten definiert wird, die geometrischen Merkmale des Halbfertigteils an den Messpunkten gemessen werden, das Abheben von Material durch das Schleifband an den Messpunkten in Abhängigkeit von der Abweichung zwischen den geometrischen Merkmalen des Halbfertigteils und den geometrischen Merkmalen des theoretischen Modells angesteuert wird.

3. Verfahren nach dem vorstehenden Anspruch, wobei eine Kartographie der Abhebungen von Material ausgehend von den Messungen der geometrischen Merkmale des Halbfertigteils definiert wird, und die Kartographie in eine relative Vorlaufgeschwindigkeitskartographie des Teils bezüglich des Schleifbands umgesetzt wird.

4. Verfahren nach dem vorstehenden Anspruch, wobei vorab eine Kalibrierung der Steuerparameter des Schleifbands an jedem der Messpunkte ermittelt wird, indem ein Entsprechungsgesetz oder eine Entsprechungstabelle zwischen den angesteuerten Parametern und der abgehobenen Materialmenge ermittelt wird.

5. Verfahren nach Anspruch 4, wobei eine Beziehung zwischen der Vorlaufgeschwindigkeit und der Materialabhebungsmenge ermittelt wird.

6. Verfahren nach dem vorstehenden Anspruch, wobei die Kalibrierung ausgehend von der Messung der abgehobenen Materialmenge an jedem Punkt, assoziiert mit mindestens zwei unterschiedlichen Vorlaufgeschwindigkeiten, ausgeführt wird.

7. Verfahren nach einem der vorstehenden Ansprüche, wobei eine abzuhebende Mindestmaterialmenge für die gesamte Oberfläche des Teils derart vorgesehen ist, um ein gewünschtes gleichmäßiges abschließendes Polieren zu erhalten.

8. Verfahren nach einem der vorstehenden Ansprüche, wobei das Teil eine Turbinenmotorschaufel, insbesondere eine Turbostrahltriebwerk-Gebläseschaufel, ist.

## Claims

1. Method for manufacturing a part by forging, comprising steps of manufacturing a semi-finished part by precision forging, determining the conform geometric features of the part to be obtained in a theoretical model and polishing the part by means of an abrasive band, the abrasive band being rotated by a wheel (111) and the pressure of the band on the surface of the part being exercised by the wheel (111), the abrasive band being mounted on a support, the said part and the support being movable with respect to each other, **characterised by** the fact that it comprises the following steps:
- measuring the geometric features of the semi-finished part after forging, and comparison with the theoretical model,
- determining on the surface of the part, the zones which are not conform,
- determining the quantity of material to be removed from the non-conform zones to make them conform,
- polishing the part by means of the abrasive band, by controlling the said band so as to remove the said quantity of material in each non-conform zone,
in that the abrasive band is controlled by varying the speed of advance relative to the part with respect to the abrasive band along the longitudinal axis of the part, the other parameters for controlling the abrasive band remaining constant, the other parameters comprising the speed of rotation of the abrasive band and the contact pressure of the wheel (111) on the surface of the part.

2. Method according to the preceding claim, according to which the surface of the part is defined in a plurality of measurement points, the geometric features of the semi-finished part are measured at said measurement points, the removal of the material by the abrasive band is controlled using the said measurement points on the basis of the discrepancy between the geometric features of the semi-finished part and the geometric features of the theoretical model.

3. Method according to the preceding claim, according to which a map of points of material to be removed is defined from the measurement of the geometric features of the semi-finished part, and said map is translated into a map of relative speed of advance of the part compared to the abrasive band.

4. Method according to the preceding claim, according to which a prior calibration of the control parameters of the abrasive band is established for each of the measurement points, by establishing a rule or a correspondence table between the control parameters and the quantity of material removed.

5. Method according to claim 4, according to which a relationship is established between the speed of advance and the quantity of material removed.

6. Method according to the preceding claim, according to which the calibration is carried out based on the measurement at each point of the quantity of material removed associated with at least two different speeds of advance.

7. Method according to any one of the preceding claims, according to which a minimum quantity of material to be removed is planned for all the surface of the part in a manner to obtain the sought- after uniform, final polish.

8. Method according to any one of the preceding claims, according to which the part is a turbine blade, more specifically a turbine fan blade.
